# FASCICULE DE BREVET EUROPEEN

(11) **EP 0 884 818 B1**
(45) Date de publication et mention de la délivrance du brevet: **22.08.2001**
(21) Numéro de dépôt: 98401379.7
(22) Date de dépôt: 09.06.1998
(51) Int. Cl.: H02H 5/00

(54) **Procédé de commande d'au moins un transistor du type IBGT apte à permettre le fonctionnement de celui-ci sous irradiation**
Vorrichtung zum Ansteuern mindenstens eines IGBT Transistors der in Betrieb unter Strahlung steht
Method for driving at least one IGBT transistor able to permit its functioning under irradiation

(30) Priorité: 11.06.1997 FR 9707238
(43) Date de publication de la demande: 16.12.1998
(73) Titulaire: COMMISSARIAT A L'ENERGIE ATOMIQUE, 75015 Paris (FR); COMPAGNIE GENERALE DES MATIERES NUCLEAIRES, 78140 Velizy Villacoublay (FR)
(72) Inventeur: Marceau, Michel, 78490 Montfort l'Amaury (FR); Cogat, Guillaume, 92260 Fontenay-aux-Roses (FR)
(74) Mandataire: Dubois-Chabert, Guy

(56) Documents cités:
- MARCEAU M: "VULCAIN: an hardened amplifier for DC motor" PCIM '96 EUROPE. OFFICIAL PROCEEDINGS OF THE TWENTY-NINTH INTERNATIONAL INTELLIGENT MOTION CONFERENCE, PCIM '96 EUROPE OFFICIAL PROCEEDINGS OF THE TWENTY-NINTH INTERNATIONAL INTELLIGENT MOTION. CONFERENCE, NURNBERG, GERMANY, 21-23 MAY 1996, pages 507-517, XP002056456 ISBN 3-928643-13-4, 1996, NURNBERG, GERMANY, ZM COMMUN. GMBH, GERMANY

## Description

### Domaine technique

La présente invention concerne un procédé de commande d'au moins un transistor du type IGBT apte à permettre le fonctionnement de celui-ci sous irradiation.

### Etat de la technique antérieure

Le durcissement de composants et de systèmes jusqu'ici s'appliquait principalement dans les domaines spatial et militaire. L'extension de cette technique au domaine nucléaire civil, caractérisé par de fortes doses de rayonnement γ, est devenue incontournable en ce qui concerne la robotique d'intervention, par exemple pour la commande de télémanipulateurs dans les usines de retraitement.

Pour la réalisation d'actionneurs, l'utilisation de moteurs à courant continu est généralement retenue en raison de leur simplicité de commande. Depuis peu, afin de gagner en volume et en entretien, on s'oriente vers l'utilisation de moteurs synchrones autopilotés dits moteurs « Brushless ». Le durcissement du variateur de ces moteurs, qui est plus complexe, devient alors plus difficile.

Afin de pouvoir commander un moteur « Brushless », ou tout autre moteur à courant alternatif, on se trouve confronté à des alimentations de 400 à 1 000 volts nécessitant l'utilisation de transistors IGBT (« Insulated Gate Bipolar Transistor » ou transistor bipolaire à grille isolée).

Confronté à un tel problème de durcissement, deux stratégies sont possibles :
- On peut utiliser des composants durcis provenant des filières militaires. Cependant ces filières n'offrent que des composants coûteux et uniquement capables de tenir des doses cumulées relativement faibles comparées aux doses cumulées prévues pour les équipements du nucléaire civil. D'autre part aucun transistor IGBT n'est à l'heure actuelle disponible dans-sa version durcie. Enfin, on peut penser que, suite à la décroissance générale de tous les budgets militaires, les filières des composants durcis seront amenées à disparaître à plus ou moins long terme.
- On peut n'utiliser que des composants des grandes séries du commerce et tenir compte, voire contrôler leurs éventuelles dérives. C'est ce que l'on appelle le durcissement système. Cette stratégie nécessite de bien connaître le comportement de chaque composant lors de son irradiation.

Cette deuxième stratégie est celle qui est considérée dans le procédé de l'invention, car elle est la seule permettant d'obtenir les tenues de doses cumulées que l'on cherche à atteindre.

Suivant cette stratégie de durcissement système, les solutions existantes sont peu nombreuses et encore très peu répandues :

Une première solution décrite dans « Handbook Of Radiation Effects » de A. Holmer-Stedle, L. Adams, Oxford Science Publications met en oeuvre des transistors bipolaires (de puissance ou non). Plusieurs études sur le comportement des transistors bipolaires ont permis de mettre en évidence le fait que, suivant la dose de rayonnement intégrée, le transistor bipolaire voit baisser significativement la valeur de son gain β. En conséquence, une solution envisageable consiste à utiliser le transistor en considérant toujours qu'il fonctionne avec un gain minimum qui le caractérise après une dose intégrée connue, prise en référence.

Une deuxième solution décrite dans « Vulcain : An Hardened Amplifier For D.C. Motor » de M. Marceau, PCIM 96, met en oeuvre des transistors N-MOS de puissance. Différentes études menées sur le comportement des transistors N-MOS sous rayonnement γ ont permis de mettre en évidence la dérive de la tension de seuil Vgs vers des tensions négatives suivant la dose intégrée avant de parvenir à une asymptote négative. Une deuxième solution de durcissement système consiste donc à commander la commutation du transistor N-MOS à l'aide de deux tensions : une positive pour le rendre totalement passant et une négative pour être capable de la bloquer quelle que soit la dérive de sa tension de seuil Vgs.

Une solution de durcissement système est donc nécessaire pour chaque type de transistor. De plus, il est nécessaire de connaître, pour chaque série de chaque constructeur de semi-conducteur, le comportement précis de chaque transistor considéré même si on est capable de prévoir les grandes orientations des dérives des caractéristiques concernées.

Aucune solution de durcissement système n'existe à l'heure actuelle pour les transistors IGBT.

L'invention a pour objet un procédé de commande permettant de réaliser un montage de puissance, à base de transistor IGBT, dont la tenue à la dose cumulée s'établisse au-delà de 10 Mrad (100 Kgy).

### Exposé de l'invention

La présente invention propose un procédé de commande d'au moins un transistor de type IGBT apte à permettre le fonctionnement de celui-ci sous irradiation, caractérisé en ce qu'on mesure la valeur de seuil Vgeₛ de la tension grille-émetteur d'un premier transistor IGBT sous irradiation et on fait varier la tension appliquée en fonctionnement entre grille et émetteur d'au moins un second transistor IGBT sous irradiation de manière à asservir la tension de seuil Vgeₛ de ce(s) second(s) transistor(s) IGBT à une valeur de consigne malgré la dérive engendrée par l'irradiation.

Dans un mode de réalisation avantageux la mesure du signal d'asservissement est effectuée sur un transistor IGBT de test.

Dans le cas d'un variateur de tension triphasé en pont, on module au moins l'une des deux sources d'alimentation, respectivement positive et négative, appliquée entre grille et émetteur d'un (ou des) second(s) transistor(s) IGBT. Avantageusement le(s) second(s) transistor(s) IGBT est (sont) soumis à une double commutation : une commutation classique en bloqué-débloqué et une commutation de l'amplitude de la tension de seuil Vge appliquée entre grille et émetteur pour la mise en oeuvre de l'asservissement selon l'invention.

Dans un mode de réalisation avantageux on commute l'amplitude de la tension positive Vp appliquée entre grille et émetteur suivant la valeur de la tension de seuil Vgeₛ du premier transistor par rapport à un repère -X, de la manière suivante, α étant une valeur de tension déterminée :
si Vgeₛ > -X alors Vp = +2α
si Vgeₛ < -X alors Vp = +α
ce qui permet d'assurer une asymptote contrôlée de sa tension de seuil Vgeₛ. On a par exemple : α = 5 volts.

Le procédé de l'invention présente plusieurs avantages :
- il permet d'atteindre des tenues à des doses d'irradiation très importantes du point de vue de l'étage de puissance (> 100 kGy) étant donné que la dérive est compensée. Il permet de concevoir des ensembles électroniques durcis sans que la partie puissance soit l'élément contraignant du point de vue de la dose reçue ;
- il permet d'obtenir un gain en rendement (ce qui est important du point de vue de l'électronique de puissance) vis-à-vis de l'utilisation de simples alimentations symétriques de fortes valeurs. Lors de la commutation d'alimentation positive de +2α à +α, la perte d'énergie nécessaire à la commande du transistor est divisée par deux ;
- il est applicable à tous les transistors IGBT du marché quel que soit leur fabriquant, à condition de prévoir quelques tests préalables ;
- il permet d'optimiser le circuit considéré dans son ensemble, car on connaît -X à l'avance.

Le procédé de l'invention est applicable à tous types d'actionneurs fonctionnant en milieu nucléaire et en particulier :
- dans les amplificateur de puissance pour moteur « Brushless » pour la robotique utilisant des transistors IGBT comme interrupteurs de puissance ;
- dans les ponts de puissance triphasés pour tous les moteurs à courant alternatif (asynchrones, ..) ;
- dans les alimentations utilisant des transistors IGBT.

### Brève description des dessins

- La figure 1 illustre le schéma équivalent d'un transistor IBGT ;
- la figure 2 illustre le synoptique d'un banc de test utilisé ;
- la figure 3 illustre l'effet de la dose cumulée sur un transistor IGBT ;
- la figure 4 illustre le comportement à forte dose d'un transistor IGBT ;
- la figure 5 illustre l'influence de la polarisation sur le fonctionnement d'un transistor IGBT ;
- la figure 6 illustre la dispersion des résultats sur un lot de transistors IGBT ;
- la figure 7 illustre le montage de base de commande d'un transistor IGBT dans un pont de puissance ;
- la figure 8 illustre le synoptique général d'un dispositif mettant en oeuvre le procédé de l'invention ;
- la figure 9 illustre les résultats de tests en commutation d'alimentations positives ;
- la figure 10 illustre un synoptique d'un amplificateur destiné à piloter un moteur « Brushless » pour robot ;
- la figure 11 illustre le synoptique de la carte de puissance de l'amplificateur illustré sur la figure 10 ;
- la figure 12 illustre un module « Driver » de la carte de puissance illustrée sur la figure 11 ;
- la figure 13 illustre un autre module de la carte de puissance illustrée sur la figure 11 ;
- la figure 14 illustre le synoptique de la carte de commande de l'amplificateur illustré sur la figure 10 ;
- la figure 15 illustre un module permettant la synchronisation et la mesure du signal de seuil Vgeₛ dans la carte de commande illustrée sur la figure 14 ;
- la figure 16 illustre cette synchronisation et cette mesure ;
- la figure 17 illustre le module d'alimentation de la commande dans la carte de commande illustrée sur la figure 14 ;
- la figure 18 illustre le module permettant la modulation dans la carte de commande illustrée sur la figure 14.

### Exposé détaillé de modes de réalisation

### COMPORTEMENT DU TRANSISTOR IGBT SOUS RAYONNEMENT γ

Le modèle le plus utilisé des transistors IGBT étant le transistor IGBT canal N ou N-IGBT (le transistor P-IGBT ayant un fonctionnement dual par rapport au transistor N-IGBT), dans la suite de la description on se limite, à titre d'exemple, à la caractérisation de ce transistor N-IGBT, appelé alors « transistor IGBT ».

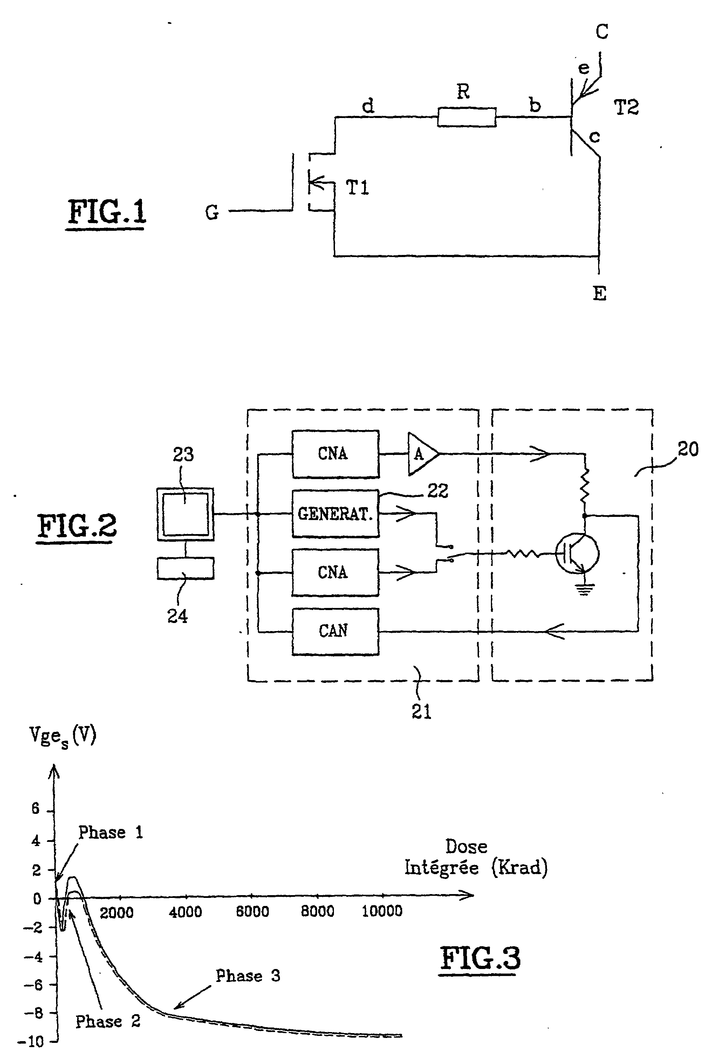

La figure 1 illustre un schéma équivalent d'un transistor IGBT, qui se caractérise par un transistor MOS en entrée (transistor T1) et un transistor bipolaire PNP en sortie (transistor T2). En commandant la grille du transistor MOS T1 on initie l'état passant ou non du transistor PNP T2 en sortie. Lorsque l'on polarise la grille positivement (i.e. Vge > 0), on crée un champ électrique à travers l'isolant sous la grille. Ce champ électrique autorise une inversion du dopage P vers un dopage N, sous la couche d'isolant. On dispose alors d'un canal N permettant le passage du courant (les électrons étant les porteurs majoritaires) entre le drain et la source du transistor MOS à travers un canal N. Le passage des électrons majoritaires du courant drain-source du transistor MOS (transistor T1), a pour conséquence le passage d'un courant de porteurs minoritaires positifs (« trous ») en sens inverse. C'est ainsi que la base du transistor PNP (transistor T2) est alimentée, permettant alors le passage d'un courant de porteurs majoritaires positifs ou « trous » (accompagné d'un courant de porteurs minoritaires d'électrons en sens inverse) directement de l'émetteur E vers le collecteur C du transistor IGBT, soit du collecteur C vers l'émetteur E du transistor bipolaire PNP de sortie. C'est l'addition de ces deux courants de porteurs majoritaires différents, prenant des « chemins » séparés, qui autorise le passage d'un courant de puissance.

Dans le cas des technologies MOS il est communément admis que la dose intégrée affecte principalement celles-ci par deux phénomènes de piégeage. Le premier piège des trous dans les oxydes et le deuxième résulte de leur migration vers l'interface Si-SiO2. La conséquence en est la dérive négative des tensions de seuil des transistors MOS. La variation de la tension de seuil est la résultante de plusieurs phénomènes, qui ont des effets pouvant s'opposer, avec des cinétiques différentes dépendant de la température et de la polarisation.

Dans le cas des composants bipolaires il est généralement admis que le principal paramètre affecté par la dose intégrée est le gain en courant (h21) du transistor. Ce dernier peut chuter de façon spectaculaire sur les composants de type Darlington. Généralement il est possible de compenser cette perte en la prenant en compte lors de la conception d'un système. C'est souvent le cas pour les circuits intégrés bipolaires.

Il a été nécessaire de caractériser les transistors IGBT sous rayonnement gamma ; en effet, une simple étude basée sur le schéma équivalent et sur les comportements des transistors MOS et bipolaires sous rayonnement ne permettrait pas de résoudre le problème technique.

Pour mesurer la variation, durant l'irradiation, de la tension de seuil Vgeₛ des composants, des essais ont eu lieu dans un irradiateur, le système de mesure étant déporté à l'extérieur. Comme illustré sur la figure 2, une carte de test spécifique 20 permet de maintenir les transistors à une distance contante de la source. Un multiplexeur analogique 21 du type AMUX64T (National Instrument) permet de sélectionner les voies et de convertir les données analogiques en numériques (CAN), ainsi que de fournir les signaux de test. Un générateur de signaux carrés 22 de fréquence 12 kHz et de tension ± 15 volts est utilisé pour alimenter les transistors entre les mesures. Un ordinateur 23 avec un logiciel spécifique pilote l'ensemble des mesures et enregistre les résultats sur disque dur 24. Les mesures sont réalisées toutes les 20 minutes. Entre chaque mesure les transistors commutent grâce au générateur 12. Les tests sont effectués pour un courant de 100 mA. Pour ce courant, on détermine par approximations successives la valeur de la tension Vge correspondante. Le débit de dose est fixé à 100 Gy/H, ce qui permet de dépasser 10 kGy de dose cumulée au bout d'une semaine.

Le graphe de la figure 3 représente l'évolution de la dérive de la tension de seuil Vgeₛ pour la quasi-totalité des transistors IGBT testés. Cette dernière est découpée en trois phases distinctives. L'apparition de la phase 2 et de la phase 3 peut survenir plus ou moins tôt par rapport à la dose absorbée selon le type de transistor IGBT concerné. De même, l'amplitude des trois phases dépend du type de transistor IGBT testé.

### • Phase 1

Comme pour un transistor MOS Canal N de puissance, on assiste au début de l'irradiation à la prédominance du piégeage de charges dans l'isolant, et en particulier de trous qui restent dans une zone relativement proche de leur site de piégeage, les électrons piégés étant eux rapidement évacués. On a donc un apport de charges positives dans l'isolant entre la grille et la zone du canal. Pour venir bloquer le transistor IGBT, il faut appliquer une tension Vge plus faible que précédemment. La tension de seuil Vgeₛ dérive alors vers le bas, vers les tensions négatives.

### • Phase 2

A partir d'une certaine dose d'irradiation, le piégeage de charges peut être compensé puis surpassé par d'autres effets contraires qui sont les suivants :

Le premier effet, ou effet d'interfaces, provient de la partie MOS du transistor IGBT. A l'interface entre l'isolant et les semi-conducteurs dopés apparaissent de nouveaux états d'interfaces où des charges négatives viennent compenser en partie les charges positives piégées.

Le deuxième effet provient de la partie bipolaire (PNP) du transistor IGBT. Une dégradation du gain β survient, comme pour le transistor MOS, à cause de l'apparition de nouveaux états d'interfaces entre isolant et semi-conducteurs dopés. Ces nouveaux états d'interfaces introduisent une accélération de la vitesse de recombinaison des porteurs de charges minoritaires et finalement réduisent le gain. Cette dégradation de gain provient prioritairement de l'ionisation de l'oxyde aux interfaces couvrant la région base-émetteur du transistor PNP.

Le troisième effet, qui provient aussi du transistor bipolaire PNP, est caractérisé par l'augmentation des courants de fuite du transistor PNP. De façon identique à la dégradation du gain, on assiste à l'augmentation des courants de fuite aux interfaces. Cette augmentation des courants de fuite aux interfaces avec l'isolant a principalement lieu dans la région de l'isolant couvrant la jonction collecteur-base du transistor PNP, c'est-à-dire aux mêmes endroits que les dégradations et nouveaux états d'interfaces intervenant dans la partie MOS. Cette augmentation des courants de fuite facilite le blocage du transistor IGBT, et fait remonter la tension de seuil Vgeₛ.

C'est l'addition de ces trois effets qui provoque la remontée de la tension de seuil Vgeₛ et facilite dans une certaine gamme de doses absorbées, le blocage du transistor IGBT. Cependant les deuxième et troisième effets atteignent rapidement des états de saturation. En conséquence la remontée de la tension seuil Vgeₛ est limitée.

### • Phase 3

Suite aux états de saturation des second et troisième effets concernant la partie bipolaire (PNP), l'effet de piégeage des charges reprend ses droits. La tension de seuil Vgeₛ dérive à nouveau vers des tensions de plus en plus négatives. En conséquence de ces piégeages de charges, il se forme toujours de nouveaux états d'interfaces. Finalement ces deux effets atteignent des états de saturation et on peut assister à une stabilisation définitive de la tension de seuil Vgeₛ.

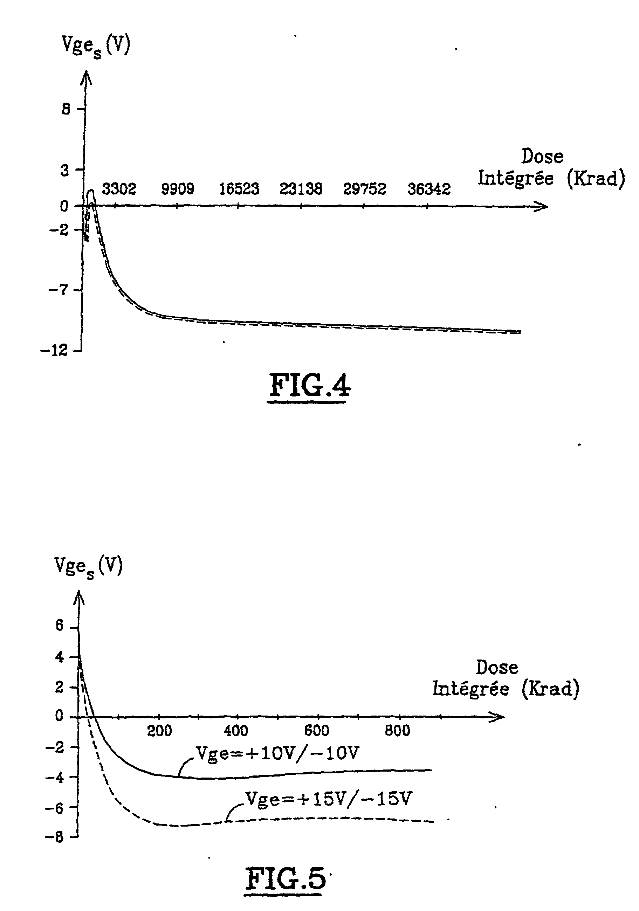

La figure 4, qui illustre le comportement d'un transistor IGBT sous forte dose d'irradiation (débit de dose : 100 Krads/H ; Vge = +15/-15 V pour f = 12 kHz ; IC = 100 mA) montre que le phénomène asymptotique observé à 10⁴ Gy est confirmé jusqu'à 4.10⁵ Gy, mais qu'il est nécessaire de prévoir une tension négative de l'ordre de -11 volts pour être certain de bloquer le transistor.

Le graphe de la figure 5 (débit de dose = 12 Krad/H ; f = 12 kHz) montre l'importance de l'amplitude de la polarisation positive. On observe le comportement d'un transistor polarisé avec une tension de +15 volts et +10 Volts, l'asymptote horizontale se déplaçant en direction de l'axe des abscisses quand la tension diminue. Il est donc nécessaire d'optimiser cette tension positive en fonction de l'application et de contrôler son niveau.

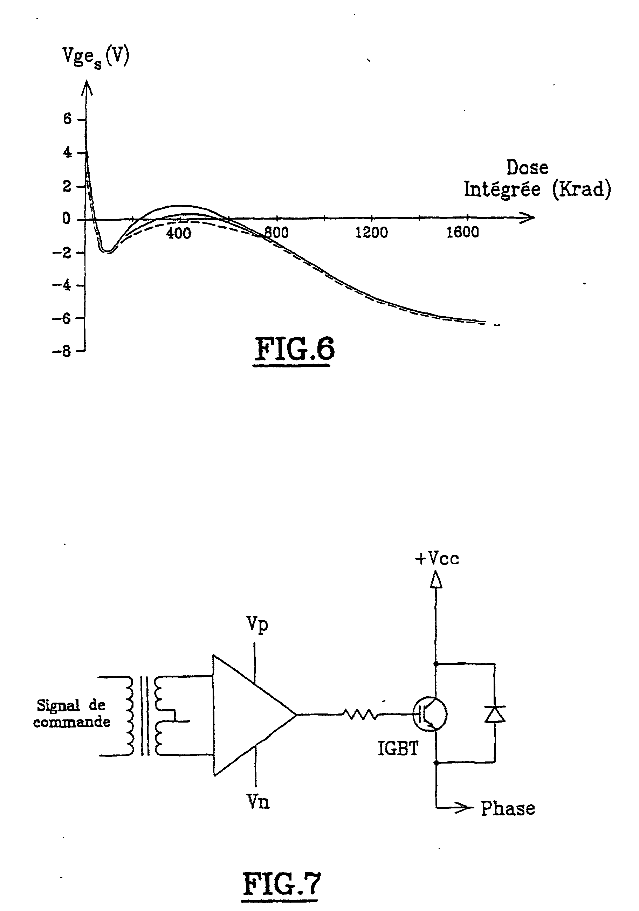

Le graphe de la figure 6 (débit de dose = 12 Krad/H ; Vge = +15/-15 V pour f = 12 kHz ; IC = 100 mA) montre la dispersion des résultats dans un même lot de composants. Pour être en mesure d'utiliser ces transistors, il est indispensable d'observer un comportement homogène des composants d'un même lot. D'une manière générale, la tenue aux rayonnements dépend beaucoup du procédé de fabrication des composants. Si celui-ci varie d'un lot à l'autre, les caractérisations doivent être renouvelées. De la même façon, deux composants portant la même référence chez deux constructeurs différents doivent être considérés séparément.

Il apparaît que même si plusieurs caractéristiques des transistors IGBT sont affectées par l'irradiation, la caractéristique principale à maîtriser est la tension de blocage de ces transistors, ou tension de seuil, Vgeₛ.

### SOLUTIONS DE DURCISSEMENT POSSIBLES

Pour résoudre le problème de durcissement de transistor IGBT, différentes solutions sont envisageables :

Une solution, décrite dans l'article « Vulcain : An Hardened Amplifier For D.C. Motor » cité plus haut, dispose de deux alimentations (positive et négative) d'amplitudes cumulées dépassant les extrêmes de la dérive de la tension de blocage du transistor. Cette solution a l'avantage de la simplicité. Par contre elle va l'encontre d'une recherche d'un rendement maximum.

L'invention consiste à mesurer l'évolution de la dérive de la tension de seuil Vgeₛ par l'intermédiaire d'un transistor IGBT et à faire suivre en conséquence l'amplitude des deux alimentations de la grille (Vp pour sa tension positive ; Vn pour sa tension négative). Le principal intérêt de cette solution consiste en un certain respect du rendement général de la commande du moteur. De plus, cette solution permet de palier une éventuelle régénération du composant.

L'invention consiste également à mesurer la valeur de seuil Vgeₛ de la tension grille-émetteur d'un premier transistor IGBT sous irradiation et à faire varier la tension appliquée en fonctionnement entre grille et émetteur d'au moins un second transistor IGBT sous irradiation de manière à asservir la tension de seuil Vgeₛ de ce(s) transistor(s) IGBT à une valeur de consigne malgré la dérive engendrée par l'irradiation. Le premier transistor peut être un transistor IGBT de test. On peut moduler au moins l'une des deux sources d'alimentation, respectivement positive Vp et négative Vn appliquées entre grille et émetteur du (ou des) second(s) transistor(s) IGBT.

Confronté à des exigences de fiabilité et de facilité de mise en oeuvre, dans un mode particulier de l'invention, on simplifie le système de suivi des alimentations Vp et Vn en considérant un système de commutation uniquement de l'alimentation Vp par rapport à une référence -X de dérive de la tension de seuil Vgeₛ. Cette simplification est conçue comme une solution plus « logique » comparée à la solution de départ uniquement analogique. L'évolution de la dérive de la tension de seuil permet de simplifier et de rendre plus fiable le circuit, un circuit analogique étant plus sensible à une dose d'irradiation qu'un circuit composé de portes logiques (à condition de bien sélectionner la technologie employée). L'invention permet d'asservir la dérive de la tension de seuil Vgeₛ à la tension de référence choisie. Le choix de cette référence (-X) est alors un paramètre d'optimisation du système.

### PRINCIPE DE LA COMMUTATION DE L'ALIMENTATION POSITIVE

Deux aspects de la commande du transistor IGBT ont guidé la mise au point du principe de commutation de l'invention, à savoir :
- L'influence de la polarisation positive. Comme décrit précédemment : au regard de la figure 5, plus la polarisation de la grille du transistor IGBT est faible, moins sa tension de seuil Vgeₛ a tendance à dériver vers les tensions négatives.
- Le rendement général du montage. La puissance consommée pour commander le transistor diffère suivant les valeurs des tensions appliquées.

Un montage de base de commande d'un transistor IGBT dans un pont de puissance, illustré sur la figure 7, met en évidence l'action des deux tensions Vp et Vn qui fixent les niveaux de tensions de la commutation initiée par le signal de commande. Dans un mode de réalisation avantageux l'invention ne prend en compte que la tension Vp pour durcir le transistor IGBT.

Dans le procédé de l'invention, on asservit alors la dérive de la tension de seuil Vgeₛ, ou tension de blocage pour un courant minimum donné, en agissant sur la valeur de la tension positive Vp appliquée sur la grille du transistor IGBT le rendant passant lors d'un fonctionnement en mode de commutation. On donne à cette tension Vp une valeur plus ou moins importante selon l'évolution de la valeur de la tension Vgeₛ au fur et à mesure du cumul de la dose de rayonnement Υ. Cet asservissement est réalisé à partir de la mesure de la tension Vgeₛ par exemple sur un transistor IGBT test, qui pilote et asservit donc les dérives des tensions de seuil Vgeₛ des autres transistors, qui sont tous identiques. Un autre exemple pourrait consister à faire la mesure directement sur le transistor sans perturber l'application.

On se fixe une valeur -X volts autour de laquelle on établit l'asservissement. Grâce à un circuit logique on vient commuter la valeur de la tension Vp suivant la valeur de la tension de seuil Vgeₛ (pour Imin donné) par rapport au repère -X.

Si Vge > -X alors Vp = +2α (dans l'exemple d'application considéré α = 5V).

Si Vge < -X alors Vp = +α.

Cette simple commutation d'alimentation positive permet d'asservir la dérive de Vgeₛ autour de - X et ainsi assure la pérennité du circuit par rapport au cumul de la dose reçue.

En fonctionnement le transistor IGBT reçoit une double commutation : la commutation le rendant passant ou bloqué et la commutation de l'amplitude de sa tension positive d'ouverture lui assurant une asymptote contrôlée de la dérive de sa tension de seuil Vgeₛ.

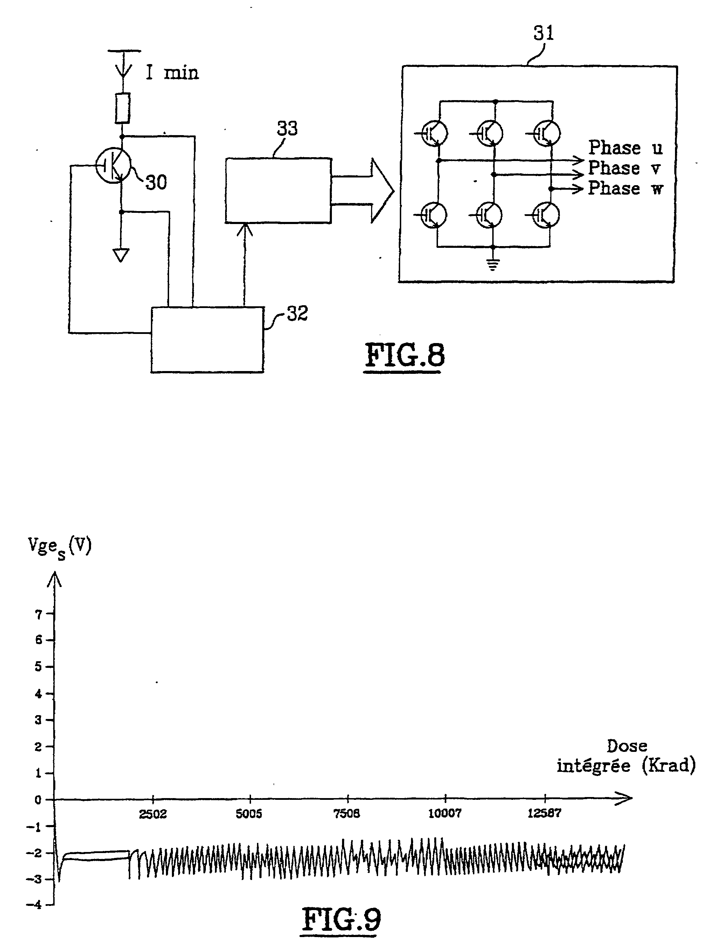

Un synoptique général mettant en oeuvre un tel procédé est illustré sur la figure 8. Sur cette figure sont représentés le transistor IGBT de test 30, un circuit 31 comprenant six autres transistors IGBT (Q1 à Q6), un module 32 de mesure et de comparaison à la tension -X, et un module 33 de calcul de la tension positive Vp.

La figure 9 illustre la dispersion des résultats obtenue pour un transistor IGBT en alimentation de grille commutée (+10 V, + 5V, -10 V) pour -X= -2.5 volts avec un hystérésis de 0.5 volts.

La courbe de la dérive de la tension Vgeₛ par rapport au cumul de la dose montre un asservissement de la dérive autour de la référence considérée.

### EXEMPLE DE RÉALISATION

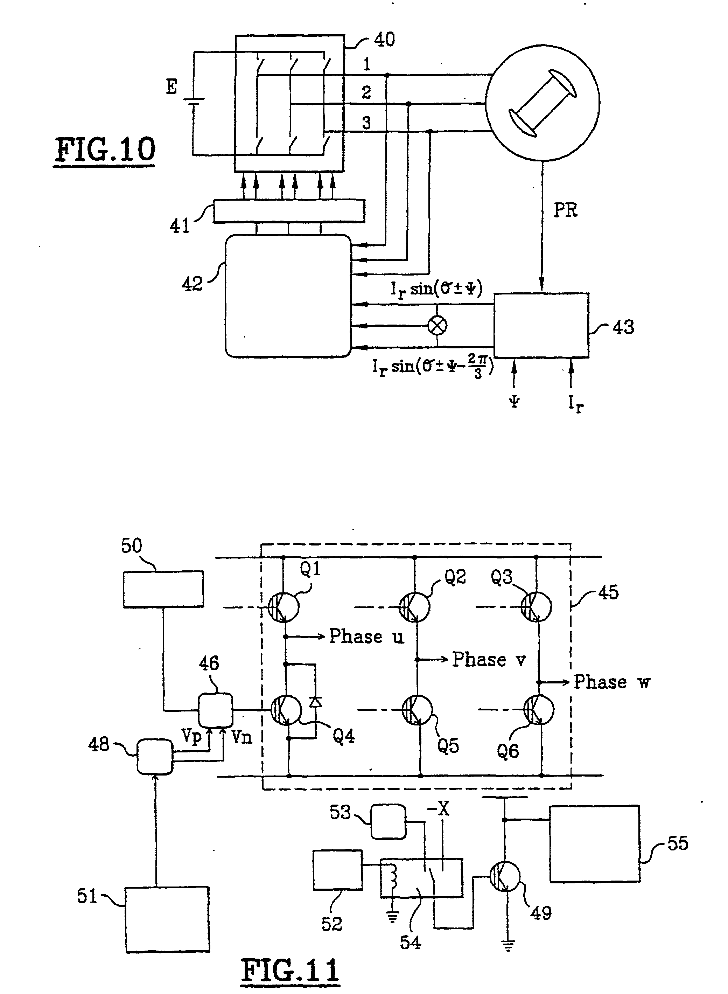

L'invention permet de réaliser un amplificateur de puissance pour moteur « Brushless » (autrement dit moteur synchrone autopiloté), en utilisant un pont de puissance triphasé « durci » à base de transistors IGBT, notamment dans l'application à un robot fonctionnant en milieu nucléaire. Cet amplificateur est capable de fournir un courant de 10 A sous une tension de 200 volts. Comme illustré sur la figure 10, il regroupe un onduleur de tension 40, la commande 41 de celui-ci selon le procédé de l'invention, un module 42 de contrôle des courants, et un module 43 de génération de courant de référence, PR correspondant à la position du rotor.

L'amplificateur considéré est constitué de deux cartes superposées : une carte de puissance qui regroupe le pont de puissance, le transistor test et les commandes associées, et une carte de commande qui regroupe les alimentations, le séquencement et toute la logique utile au fonctionnement de l'amplificateur.

La figure 11 illustre le synoptique de la carte de puissance. Cette carte contient un pont de puissance 45 de six transistors IGBT Q1 à Q6, ainsi que les étages « Drivers » 46 et les secondaires d'alimentation 48 respectifs, isolés galvaniquement. La figure 11 illustre la commande d'un seul transistor IGBT, Q₄. Mais les cinq autres transistors IGBT sont commandés de la même façon. Cette carte contient également un transistor IGBT de test 49 qui se trouve dans des conditions de fonctionnement comparables (même température notamment) à celle des transistors du pont de puissance 45. Sur cette figure sont également représenté un module de commande logique 50, un module 51 d'alimentation des tensions Vp et Vn isolé galvaniquement, un module 52 de mesure de temps, un étage driver 53, un relais mesure 54 et un module 55 de mesure de la tension de seuil Vgeₛ.

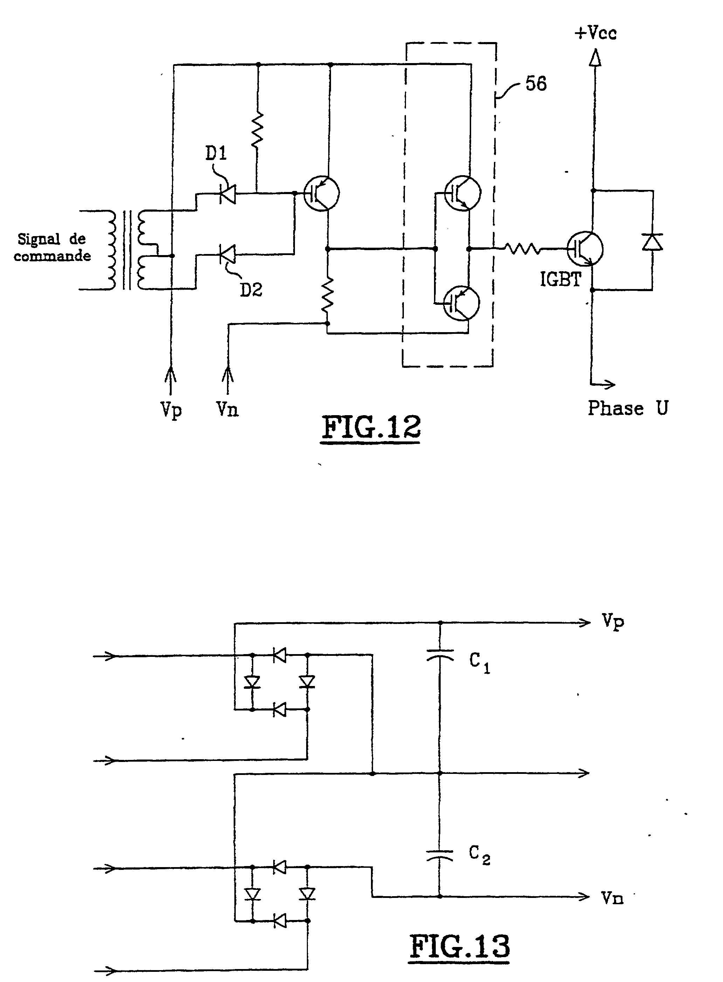

Les fonctions intégrées de la carte de puissance sont les suivantes :
- Le pilote (module Driver 46), illustré sur la figure 12, qui permet la commande directe d'un transistor IGBT à partir de l'information logique obtenue en sortie du module 50. Une démodulation est réalisée par deux diodes D1 et D2 de type « Schottky » montées en redresseurs avec point milieu. Le signal ainsi redressé attaque un amplificateur 56 de type « Push-Pull ».
- Le secondaire 48 d'alimentation de la grille du transistor IGBT considéré, comme illustré sur la figure 13, qui est constitué d'une part d'un étage de redressement réalisé par des diodes de type « Schottky », par exemple de type 1N5819, pour limiter la chute de tension et d'autre part, d'un filtrage réalisé par deux condensateurs (C1, C2). On obtient ainsi deux tensions Vp et Vn qui alimentent l'étape de puissance.

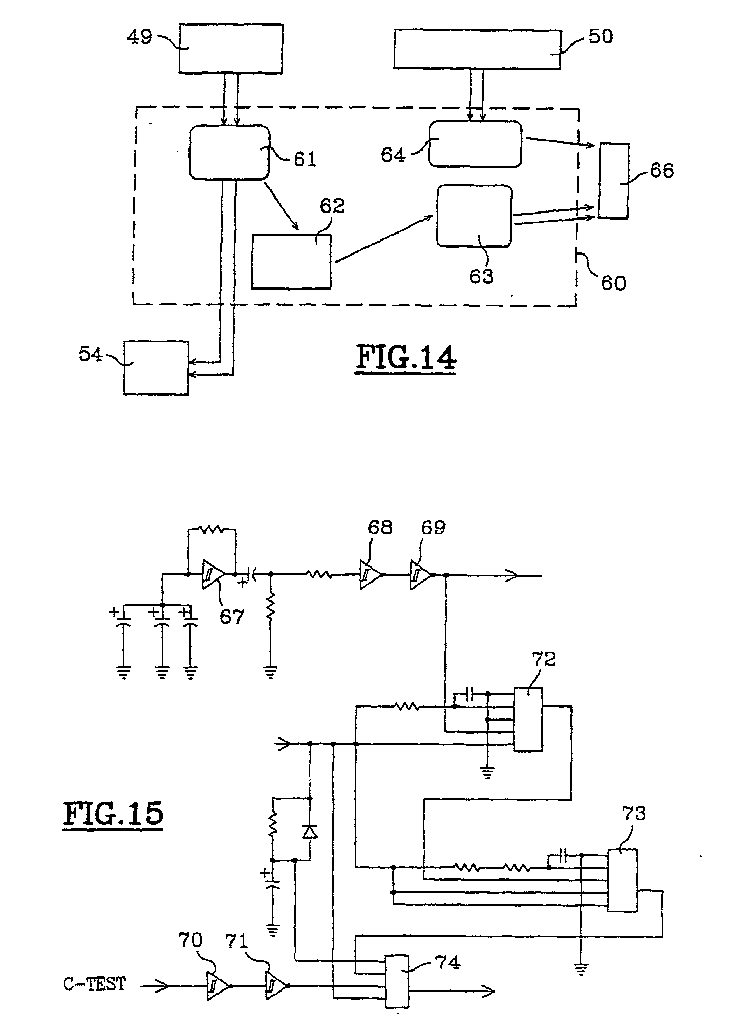

La carte de commande 60, dont le synoptique est illustré sur la figure 14, regroupe toutes les parties numériques de l'amplificateur considéré. Cette carte contient notamment toute la logique de durcissement du système (synchronisation, mesure et traitement), la modulation des ordres de commutation des différents transistors du pont, ainsi que le découpage des alimentations des grilles des transistors IGBT afin de les isoler galvaniquement par des transformateurs. Cette carte comprend un module de synchronisation 61, un relais de commutation d'alimentation positive Vp 62, un module d'alimentation 63, et un module de modulation 64. Le module de synchronisation 61 est relié au transistor de test 49 et au relais de mesure 54. Le module de modulation 64 et le module d'alimentation sont reliés à la carte de puissance 66, le module de modulation étant également relié au module de commande 50.

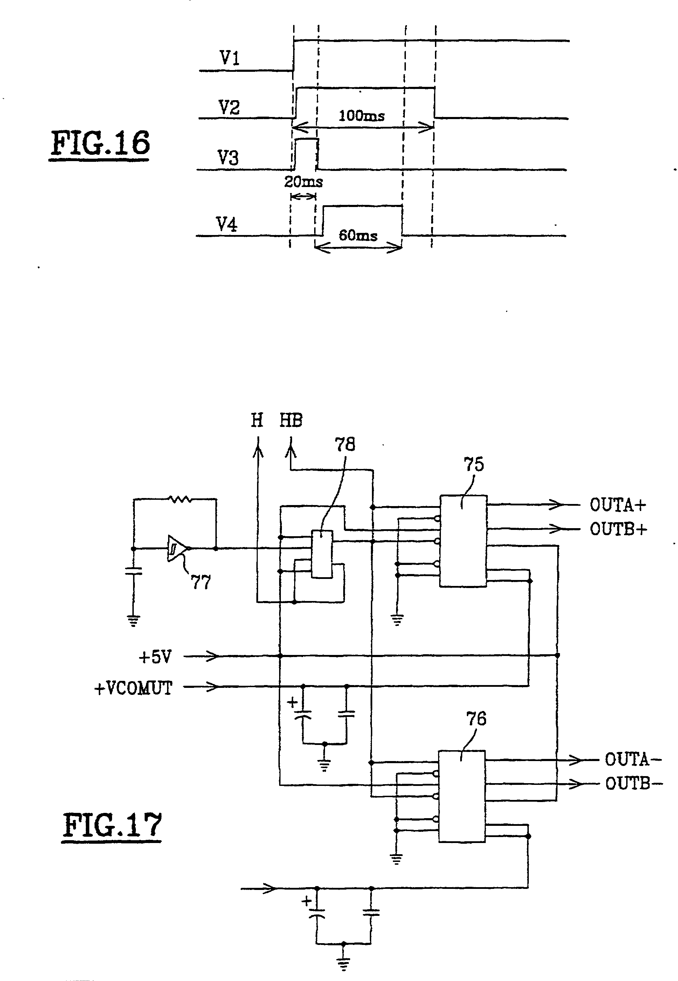

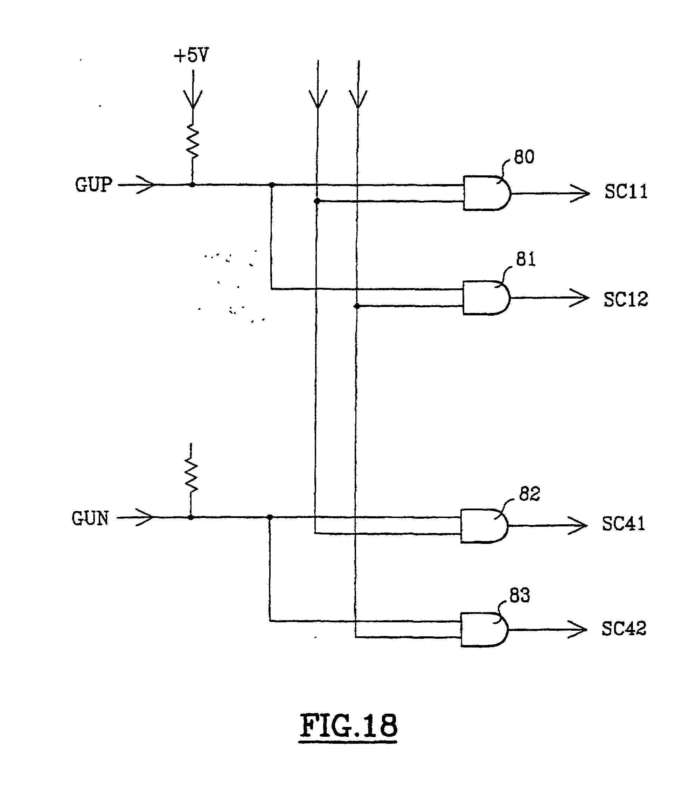

Les fonctions intégrées de la carte de commande 60 sont les suivantes :
- La synchronisation et la mesure de la tension de seuil Vgeₛ : le module 61 permettant cette synchronisation et cette mesure, qui est illustré sur la figure 15, contient tout le séquencement du durcissement système mis en place dans l'amplificateur considéré. Ce module comprend notamment des circuits NON-ET-trigger 67, 68, 69, 70 et 71, des circuits monostables 72 et 73 de type 74LS123, et une bascule D 74. Le séquencement réalisé, illustré sur la figure 16, est le suivant : on génère toutes les quinze minutes (V1) une impulsion de 100 ms (V2). Le front montant de cette impulsion vient déclencher le relais 54 de la carte puissance. Il en découle l'arrêt de la commutation du transistor IGBT de test 49 et la polarisation négative de sa tension de grille sous-1.75 volts. Pendant les 100 ms de l'impulsion, on crée un retard de 20 ms (V3) afin de laisser le temps au relais d'effectuer son changement d'état. Puis pendant 60 ms (V4) on effectue la mesure de la tension Vceₛ du transistor de test 49 afin de connaître son état (bloqué ou saturé). Selon l'état constaté on donne l'ordre, ou non, au relais de commande des alimentations positives 62 de basculer. Tout comme l'horloge (T = 15 minutes) l'impulsion de 100 ms est réalisée à l'aide d'une porte NON-ET-trigger 67. Les retards de 20 ms et 60 ms sont réalisés à l'aide de circuits monostables 72 et 73.
- L'alimentation de la commande : le module 63 permettant cette alimentation, qui est illustré sur la figure 17, génère un découpage primaire des alimentations positives et négatives des grilles des transistors IGBT du pont de puissance. Ce découpage, réalisé à l'aide de deux circuit intégrés de puissance 75 et 76 par exemple de type unitrode UC3707, permet d'attaquer les transformateurs d'alimentation. Ces derniers sont alimentés par une tension qui est commutée par le relais de commutation d'alimentation 62. L'horloge de modulation (f = 595 Hz) est fabriquée par un oscillateur à trigger de Schmitt 77 et une bascule D 78 montée en diviseur par deux. L'horloge de modulation a un rapport cyclique de 50 % pour éviter les composantes continues dans le transformateur.
- La modulation : le module 64 récupérant l'horloge du module d'alimentation de la commande, qui est illustré sur la figure 18 a pour unique fonction de moduler la commande des transistors IGBT du pont de puissance afin de pouvoir alimenter les transformateurs de commande. La modulation est réalisée par des portes logiques ET 80, 81, 82, 83 qui reçoivent le signal de commande du transistor et l'horloge issue du trigger de Schmitt 77.

## Revendications

1. Procédé de commande d'au moins un transistor de type IGBT apte à permettre un fonctionnement de celui-ci sous irradiation, caractérisé en ce qu'on mesure la valeur de seuil Vgeₛ de la tension grille-émetteur d'un premier transistor IGBT (30) sous irradiation et on fait varier la tension appliquée en fonctionnement entre grille et émetteur d'au moins un second transistor IGBT (Q1-Q6) sous irradiation de manière à asservir la tension de seuil Vgeₛ de ce (s) transistor (s) IGBT à une valeur de consigne malgré la dérive engendrée par l'irradiation.

2. Procédé selon la revendication 1, dans lequel le premier transistor (30) est un transistor IGBT de test.

3. Procédé selon la revendication 1, dans lequel on module au moins l'une des deux sources d'alimentation, respectivement positive Vp et négative Vn, appliquées entre grille et émetteur du (ou des) second(s) transistor(s) IGBT.

4. Procédé selon la revendication 3, dans lequel le (ou les) second(s) transistor(s) IGBT est (sont) ainsi soumis à une double commutation : une commutation classique en bloqué-débloqué et une commutation de l'amplitude de la tension de seuil Vge pour la mise en oeuvre de l'asservissement.

5. Procédé selon la revendication 4, dans lequel on commute la tension positive Vp appliquée suivant la valeur de la tension de seuil Vgeₛ du premier transistor (30) par rapport à un repère -X, de la manière suivante, α étant une valeur de tension déterminée :
Si Vgeₛ > -X alors Vp = +2α
Si Vgeₛ < -X alors Vp = +α
ce qui permet d'assurer une asymptote contrôlée de sa tension de seuil Vgeₛ.

6. Procédé selon la revendication 5, dans lequel on a : α = 5 volts.

7. Utilisation du procédé selon l'une quelconque des revendications précédentes pour réaliser un variateur de puissance pour moteur « Brushless », en utilisant un pont de puissance triphasé durci à base de transistors IGBT.

8. Utilisation du procédé selon l'une quelconque des revendication 1 à 6, pour réaliser l'alimentation de puissance de moteurs asynchrones.

## Patentansprüche

1. Verfahren zum Ansteuern wenigstens eines Transistors des IGBT-Typs, das dessen Betrieb unter Strahlung ermöglicht,
**dadurch gekennzeichnet,**
dass man den Schwellenwert Vgeₛ der Gate-Emitter-Spannung eines ersten IGBT-Transistors (30) unter Strahlung misst und die beim Betrieb zwischen Gate und Emitter wenigstens eines zweiten IGBT-Transistors (Q1-A6) angelegte Spannung variiert, um die Schwellenspannung Vgeₛ dieses (dieser) IGBT-Transistors (-Transistoren) auf einen Sollwert bzw. Einstellwert zu regeln, trotz der durch die Strahlung verursachten Abweichung.

2. Verfahren nach Anspruch 1, bei dem der erste Transistor (30) ein IGBT-Testtransistor ist.

3. Verfahren nach Anspruch 1, bei dem man wenigstens eine der beiden Versorgungsquellen mit jeweils positiver Vp bzw. negativer Vn Spannung moduliert, die zwischen Gate und Emitter des (oder der) zweiten IGBT-Transistors (-Transistoren) angelegt werden.

4. Verfahren nach Anspruch 3, bei dem der (oder die) zweite(n) IGBT-Transistor(en) einer doppelten Kommutation bzw. Umschaltung unterzogen wird (werden): einer klassischene Sperr-Durchlass-Kommutation bzw. Umschaltung und einer Kommutation bzw. Umschaltung der Amplitude der zur Durchführung der Regelung angelegten Schwellenspannung Vgeₛ.

5. Verfahren nach Anspruch 4, bei dem man die entsprechend dem Wert der Schwellenspannung Vgeₛ des ersten Transistors (30) in Bezug auf einen Richtwert -X angelegte positive Spannung Vp folgendermaßen kommutiert bzw. umschaltet, wobei α ein festgelegter Spannungswert ist:
wenn Vgeₛ > -X, dann Vp = +2α
wenn Vgeₛ < -X, dann Vp = +α
was ermöglicht, eine kontrollierte Asymptote seiner Schwellenspannung Vgeₛ zu gewährleisten.

6. Verfahren nach Anspruch 5, bei dem α = 5 Volt beträgt.

7. Anwendung des Verfahrens nach einem der vorangehenden Ansprüche zur Realisierung eines Leistungsvariators für einen bürstenlosen Motor, wobei eine gehärtete Dreiphasen-Leistungsbrücke auf der Basis von IGBT-Transistoren verwendet wird.

8. Anwendung des Verfahrens nach einem der Ansprüche 1 bis 6 zur Realisierung der Leistungsversorgung von Asynchronmotoren.

## Claims

1. Process for controlling at least one IGBT type transistor enabling its operation under irradiation,
characterized in that the value of the threshold value Vgeₛ of the gate-emitter voltage of a first IGBT transistor (30) under irradiation is measured, and the voltage applied between the gate and the emitter of at least one second IGBT transistor (Q1-Q6) under irradiation is varied during operation, such that the threshold voltage Vgeₛ of this (these) IGBT transistor(s) is slaved to a set value despite the drift caused by irradiation.

2. Process according to claim 1, in which the first transistor (30) is a test IGBT transistor.

3. Process according to claim 1, in which at least one of the two power supply sources (positive Vp and negative Vn) applied between the gate and emitter of the second IGBT transistor (s) , is modulated.

4. Process according to claim 3, in which the second IGBT transistor(s) is (are) subjected to double switching; conventional switching in blocked-unblocked and amplitude switching of the threshold voltage Vge for implementation of slaving.

5. Process according to claim 4, in which the applied positive voltage Vp is switched as a function of the value of the threshold voltage Vgeₛ of the first transistor (30) compared with reference -X as follows, where α is a determined voltage value:
If Vgeₛ > -X then Vp = +2α
If Vgeₛ < -X then Vp = +α
so that a controlled asymptote car be obtained of its threshold voltage Vgeₛ.

6. Method according to claim 5, wherein α = 5V.

7. Use of the method according to any one of the preceding claims for implementing a power variator for a brushless motor using a hardened three-phase power bridge based on IGBT transistors.

8. Use of the method according to any one of the claims 1 to 6 for implementing the power supply for asynchronous motors.
